# EUROPEAN PATENT APPLICATION

(11) **EP 2 455 608 A1**
(43) Date of publication of application: **23.05.2012**
(21) Application number: 10800130.6
(22) Date of filing: 08.07.2010
(51) Int. Cl.: F03D 1/02, F03D 9/00

(54) **WIND TURBINE**

(30) Priority: 13.07.2009 UA 2009007348
(71) Applicant: Tovarystvo Z Obmezhenoyu Vidpovidalnistyu Proektno-Konstruktorske-Tehnologichne Byuro «CONCORD», M. Dnipropetrovsk 49069 (UA)
(72) Inventor: GOLUBENKO, Mykola Stepanovych, m. Dnipropetrovsk 49008 (UA); DOVGALYUK, Olesya Borysivna, m. Dnipropetrovsk 49069 (UA); KADATSKY, Oleksandr Leonidovych, m. Dnipropetrovsk 49099 (UA); KURDYUKOV, Sergiy Dmitriyovych, m. Dnipropetrovsk 49089 (UA); TSYGANOV, Valeriy Oleksandrovych, m. Dnipropetrovsk 49099 (UA)
(74) Representative: Jeck, Anton
(86) International application number: PCT/UA2010/000040
(87) International publication number: WO 2011/008185

(57) **Abstract**

Title of the invention: a wind turbine. Field of use: wind energy equipment. The essence of the invention: a wind turbine, including a fixed support, a rotational head and a wind-wheel with generators and additional wind-wheels, the axis of rotation of the wind-wheel being located horizontally, the wind-wheel blades having pivoting end portions, and the additional wind-wheels being connected with the generators, according to the invention the wind-wheel blades are equipped with box-like members mounted on the ends of their fixed portions, the generators and the pivoting end portions of the blades are mounted on the box-like members, wherein the generators are located on the front side of the wind-wheel blade with respect to the air flow.

## Description

The device relates to wind power equipment, namely to a wind turbine.

There is known a wind turbine (the first analog) comprising a fixed support, a rotational head and a wind-wheel, on blades of which generators with additional wind-wheels are located, the rotation axis of the wind-wheel being located horizontally, and the generators with the additional wind-wheels being located closer to the ends of the wind-wheel blades or directly on their ends (U.S. patent No. 5,151,610, F03D1 / 00, Publ. 1992.09.29).

The main disadvantage of the wind turbine is the generators position closer to the ends of the wind-wheel blades or on their ends, what reduces the efficiency of the additional wind-wheels, and the presence of high centrifugal forces which act on the generators and which the wind-wheel blades sustain.

A closest in technical essence to the device claimed is a wind turbine according to the Ukrainian patent Nº 76797 C2 (IPC [2006.01] F03D 7/02, published in Bull. Nº 9 of 15.09.2006), which is taken here as the closest prior art. This wind turbine includes a fixed support, a rotational head and a wind-wheel with generators and additional wind-wheels, the rotation axis of the wind-wheel being positioned horizontally, wherein blades of the wind-wheel have pivoting end portions, the generators are located on the fixed portions of the wind-wheel blade, the pivoting end portions of the blade are pivotally mounted on the generators and the additional wind-wheels are mounted on the generators shafts.

The closest prior art has several significant disadvantages associated with the location of the end portions of the wind-wheel blades on the generators. Thus, to replace the generator it is necessary to completely dismantle the blade of the wind-wheel, namely to disconnect mechanisms for turning the end portions of the blades from electrical networks, control, monitoring, diagnostics, grounding systems etc., to remove the pivoting end portion of the blade together with hinges and mechanisms of its turning, and only then to remove the generator. After replacing the generator it is necessary to re-assemble all parts again, to check and adjust all mechanisms and systems of the wind-wheel blades. In addition, the presence of the pivoting end blade portions on the one side of generators and stationary blade portions on the other side worsen the conditions of cooling the generators by air flow.

The second disadvantage is in that the generators take all the forces (aerodynamic and centrifugal), bending moments and vibrations acting on the end portions of the wind-wheel blades. To provide the desired structural strength it is required a substantial increasing in the thickness of the generator bodies and respectively their weights, because all of the loads act on the generators in the direction of the lowest strength of their bodies. The weight of the generator is essential because it is one of the heaviest elements of the wind-wheel blades.

The object of the invention is providing a wind turbine free of these disadvantages. The object is achieved by a wind turbine including a fixed support, a rotational head and a wind-wheel comprising generators and additional wind-wheels, wherein the rotation axis of the wind-wheel is located horizontally, the wind-wheel blades have pivoting end portions, and the additional wind-wheels are connected with the generators, in which according to this invention the wind-wheel blades are equipped with box-like members mounted on the ends of their fixed portions, generators and pivoting end portions of the blades are mounted on the box-like members, wherein the generators are located on the front side of the wind-wheel blade with respect to the air flow, and in some embodiments of the wind turbine:
to improve the mounting and maintenance of the elements of the wind-wheel with the mechanisms for turning the end blades portions, elements of fastening the stationary portions of the wind-wheel blades, the generators and the mechanisms for turning the end blade portions are located inside the box-like members.
to reduce the bending moments caused by centrifugal forces acting on the generator and taken by the wind-wheel blades, the generators are mounted on the box-like members on the front side of the wind-wheel blade relative to the air flow, but the generators bodies are located inside the box-like members;
to reduce the weight of the generators they are equipped with multipliers, which are connected with additional wind-wheels;
to reduce or completely eliminate the action of gyroscopic moments acting on the wind-wheels of the generators, the generators are connected to the additional wind-wheel via a bevel-gear set, wherein the rotation axes of generators shafts are located at an angle from 0 to 30 degrees in any direction relative to a line parallel to the rotation axis of the wind-wheel;
to reduce the loads on the blades of the additional wind-wheels or for placing additional wind-wheels closer to the wind-wheel blade, in various embodiments of the wind turbine, the blades of the additional wind-wheel are located at an angle from 80 to 100 degrees with respect to its rotation axis;
to place the additional wind-wheels closer to box-like members cutouts are made in the wind-wheel blades for placing the additional wind-wheels.

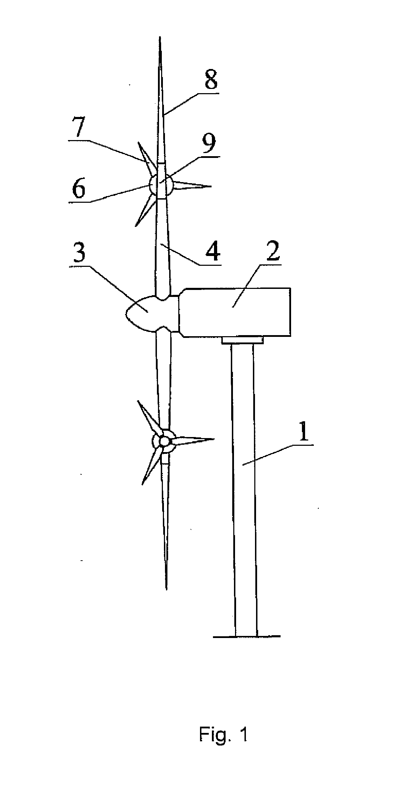

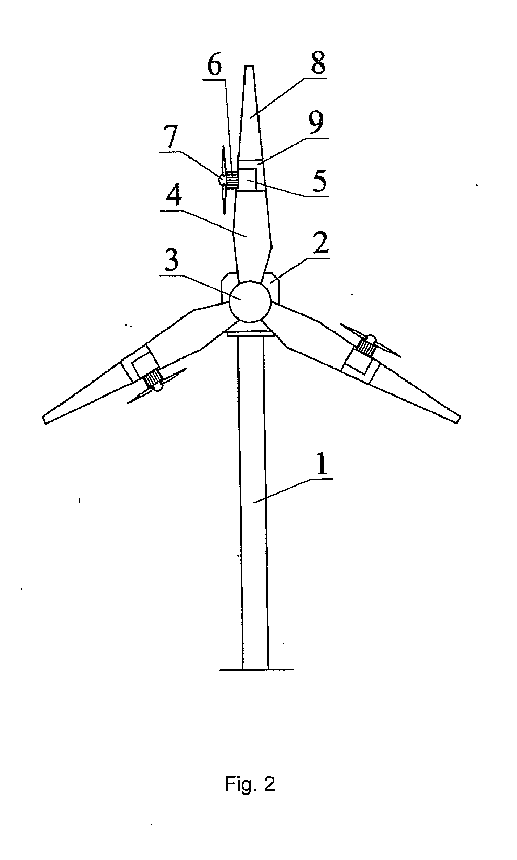

To clarify the construction of the device claimed the description of its operation and drawings are presented below, wherein Fig. 1 and Fig. 2 show a general view of the wind turbine, and on the other figures various embodiments of a wind turbine in accordance with the present invention are depicted.

The claimed device includes a fixed support 1 (Fig. 1, Fig. 2) and a rotational head 2 with a wind-wheel 3. Box-like members 5 are attached to stationary portions 4 of the blades of the wind-wheel 3 (Fig. 2). Generators 6 with additional wind-wheels 7 are attached to the box-like members 5 on the front side of the blades of the wind-wheel 3 and on the rear side end portions 8 of the blades of the wind-wheel 3 are attached. The box-like members 5 are equipped with fairings 9, inside which flexible joints 10 (Fig. 3) of the end portions 8 of the wind-wheel blades are placed. The flexible joints 10 are equipped with mechanisms 11 for turning the end portions 8. The outer surface of the fairing 9 is profiled (section A, Fig. 4) and smoothly connected to the surface of the fixed portions 4 (section B-B of Fig. 5) and the end portions 8 of the wind-wheel blades.

Under the action of wind (Fig. 2) the blades of wind-wheel 3 circulate together with the additional wind-wheels 7, which rotate due to their motion relative to the air and turn the shafts of the generators 6. Electrical energy generated by the generator 6 is transmitted by electric cables to consumers.

Due to the fact that speed of the additional wind-wheels 7 is much higher than wind speed, they rotate many times faster than the wind-wheel 3. This allows using high-speed generators.

Location of the generator on the front side of the wind-wheel blade, with respect to the air flow, provides the best conditions for cooling the generators by the air flow.

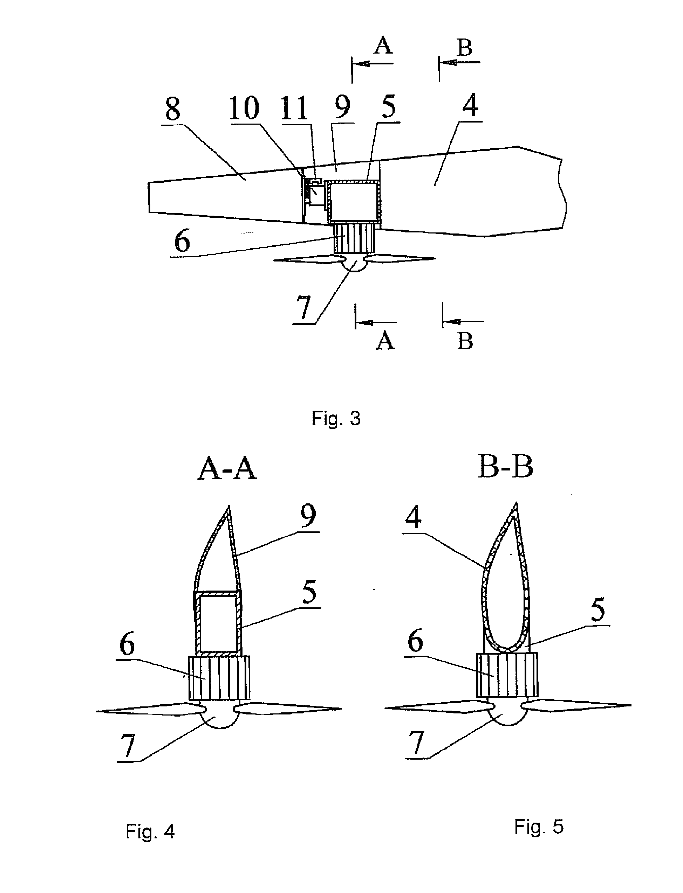

When wind speed changes the wind-wheel blades end portions 8, which are mounted on the flexible joints 10 and provide necessary speed of wind-wheel 3, are turned by turning mechanism 11 (Fig. 3).

When changes in wind direction the rotational head 2 (Fig. 1) of the wind turbine changes its position and all the time directs the wind-wheel 3 to meet the wind.

To stop the wind turbine pivoting portions 8 (Fig. 2) of the blades of the wind-wheel 3 are to be turned 90 degrees relative to the working position and the wind-wheel 3 is braking. If it is necessary to remove the generator 6 for repair or replacement no other elements of the wind-wheel blade are to be removed (unlike the closest prior art where you need to remove all but stationary portions 4 of the wind-wheel blades).

After the next movement of the pivoting portions 8 of the blades into the working position the wind-wheel 3 starts rotation and electricity supply to consumers is resumed.

During the rotation of wind-wheel 3 all the forces, bending moments and vibrations acting on the pivoting end portions 8 (Fig. 3) of the wind-wheel blades are taken by the box-like members 5 being most robust in the direction of the largest of these bending moments and forces. Thus, the effect of any external forces or moments on the bodies of the generators 6 is excluded.

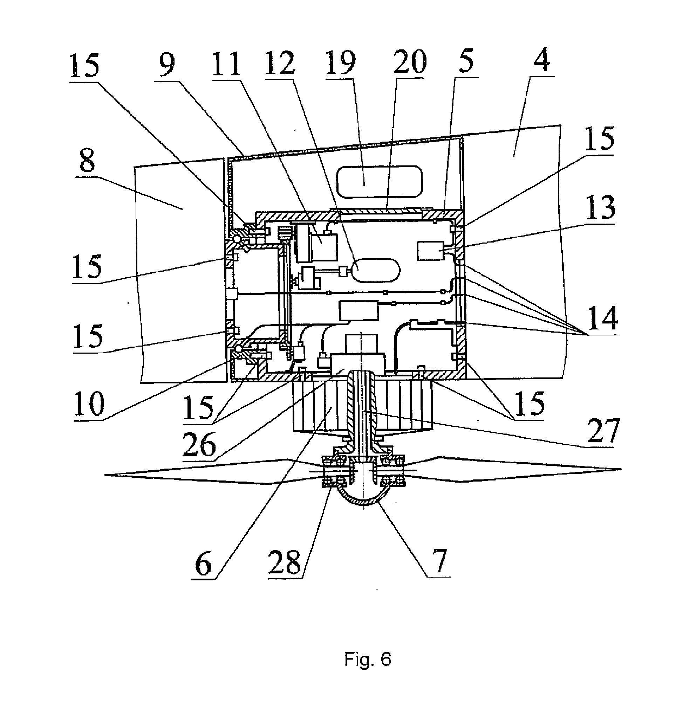

Fig. 6 shows an embodiment of the wind turbine, in which mechanisms 11 for turning the pivoting end blade portions, mechanisms 12 of emergency moving the end portions to the feathered position, an emergency current supply devices 13, a cable networks 14, elements 15 for fastening the stationary blades 4 portions, of the generators 6, the flexible joints 10 and the end blade portions 8, as well as other devices, such mechanisms 26 for turning the blades of the additional wind-wheel 7 (in the embodiment, where the blades of the additional wind-wheels 7 are mounted on flexible joints 28), which are connected with the help of shafts 27 with the blades of additional wind-wheels 7. In addition, holes that are closed by tight lids 19, 20 are made in the fairing 9 of the box-like members and in the box-like members 5. The holes are designed to provide passing of technical staff inside the box-like members 5. This allows maintenance of the wind-wheel blades to be performed in any weather conditions and provides convenient access to all of these elements of the blades. Moreover, favorable conditions for the reliable operation of the blade elements inside the box-like members 5 are provided.

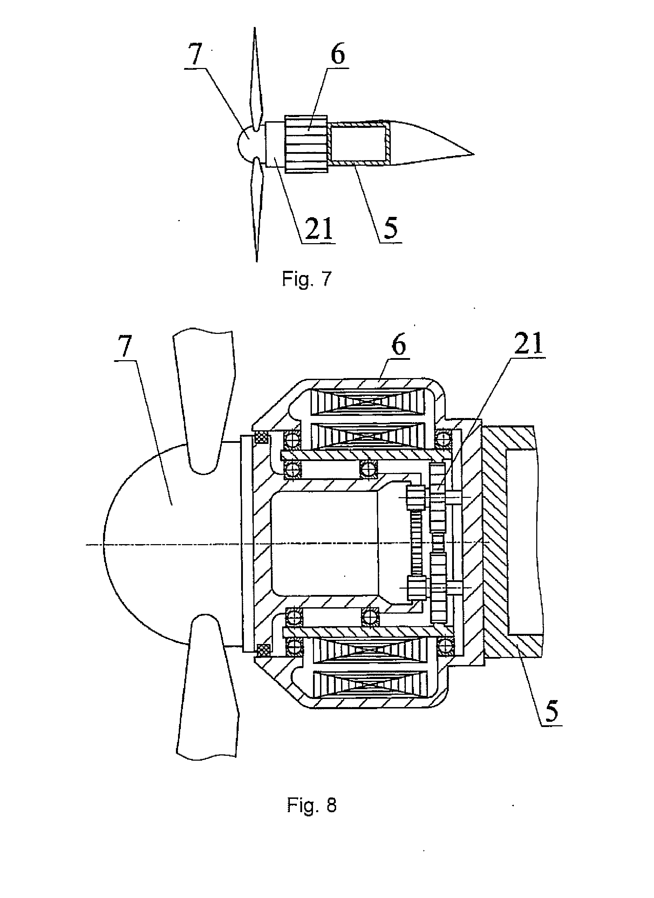

Fig. 7, Fig. 8 show an embodiments of the wind turbine, in which the generators 6 are equipped with multipliers 21. Availability of the multipliers 21 allows to made generators 6 with more high speed. Placing a multiplier 21 inside the generator 6 (Fig. 8) allows the position of the additional wind-wheel blades 7 to be closer to the wind-wheel 3 (compared to the embodiment of Fig. 7).

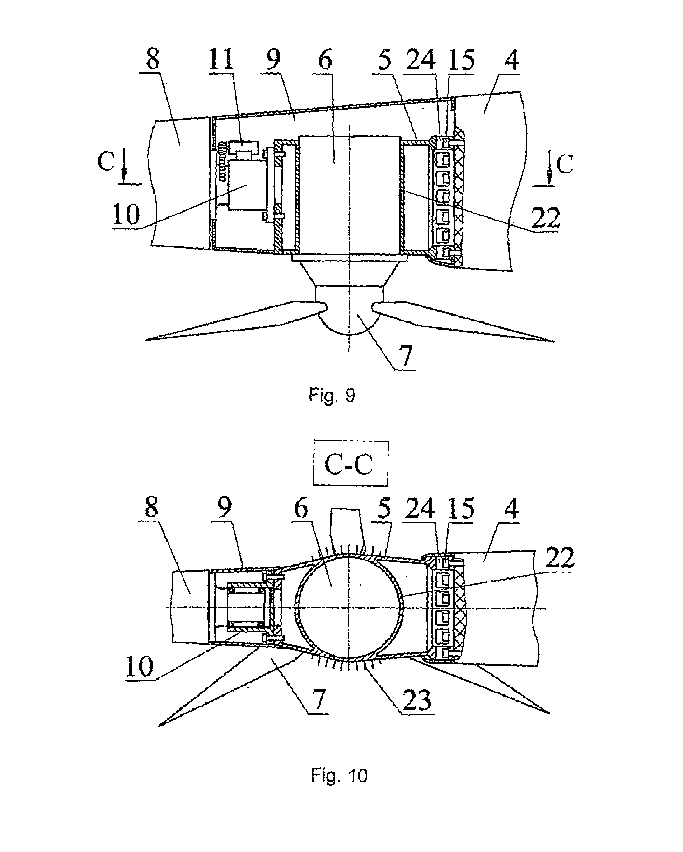

Fig. 9, Fig. 10, Fig. 11, Fig. 12, Fig. 13 show an embodiment of the wind turbine, in which the generators 6 are mounted on the box-like member 5 on the front side of the wind-wheel blades with respect to the air flow, but the bodies of the generators 6 are located inside the box-like members 5.

In the embodiment of the wind turbine on Fig. 9, Fig. 10 to remove heat from the generator 6 the box-like members 5 are provided with cylindrical shells 22 which are partially cooled by air flow and partially transfer heat to sidewalls of the box-like members 5, which are also cooled by air flow, the distance between the outer surface of the generators bodies 6 and the inner surface of the cylindrical shells 22 being minimum to ensure intense heat transfer from the generator body 6 to the cylindrical shells 22. For better cooling, ribs 23 are arranged on the walls of the box-like members 5. To eliminate action of the bending moments onto the elements 15 for fastening stationary blades portions 4 cutouts 24 are made in the box-like members 5, the fastening elements 15 being placed opposite its side walls.

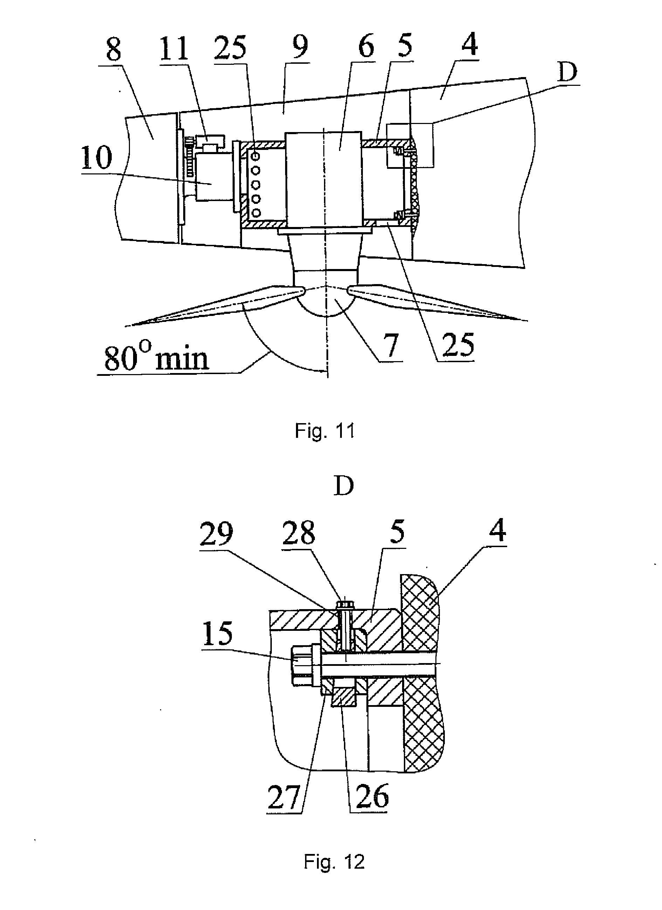

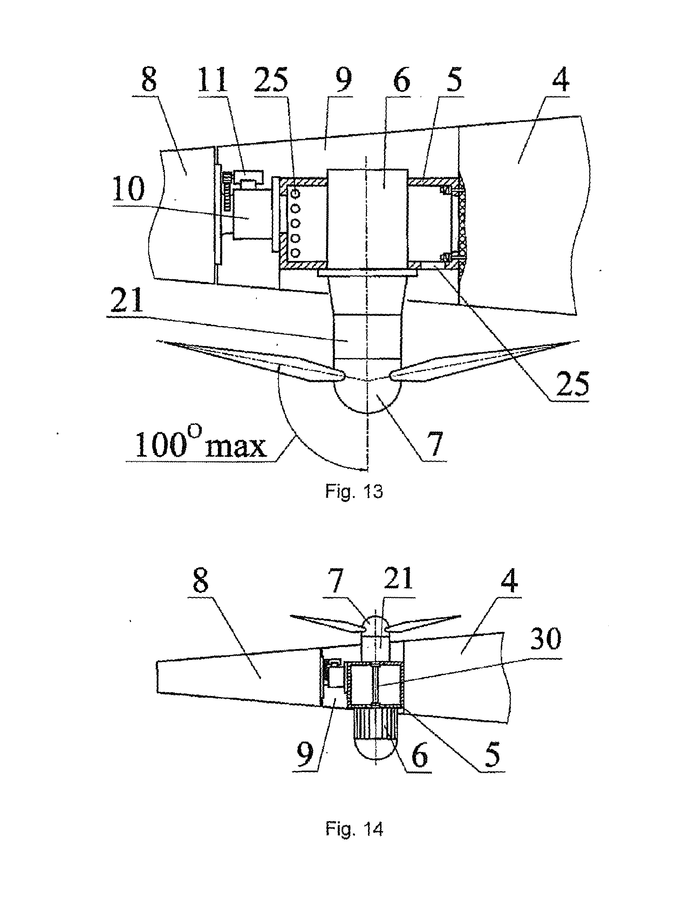

Fig. 11, Fig. 13 show embodiments of the wind turbine similar to those of Fig. 9, Fig. 10, but openings 25 for cooling the generator body 6 by wind flow are made in the box-like members 5, that is why they are made without cylindrical shells, in the embodiment of Fig. 13 the generators 6 being equipped with the multipliers 21. To ensure the best placement of the additional wind-wheel blades 7, in Fig. 11 they are tilted towards the wind flow, and in Fig. 13 - to the wind-wheel blades side, while in the embodiment of Fig. 13 additional centrifugal forces counteract aerodynamic forces on the wind-wheel blades 7 and reduce bending moments acting on the additional wind-wheel blades 7. On structural grounds said wind turbine embodiments have an advantage at an angle of deflection of the additional wind-wheel blades with respect to its rotation axis in the range from 80 to 100 degrees.

Fig. 12 shows view D of Fig. 11, presenting an embodiment of the wind turbine using the wedges 26, 27 for tension of the elements 15 (in this embodiment - screws) for fastening the fixed blades portions 4 to the box-like member 5. For easy access to elements for moving wedges (in this embodiment - screws 28), the elements 28 are located on the outer surface of the box-like member 5 and are connected through holes 29 with the wedges 26. In this embodiment, the tension of the fastening elements 15 is performed by rotating the screws 28 and corresponding movement of the wedges 26, the wedges 27 moving along the axes of the elements 28 and increasing their tensile force.

Fig. 14 shows an embodiment of the wind turbine, in which the generators 6 are placed in front of wind-wheel blades and the additional wind-wheels 7 - behind them. The additional wind-wheel 7 are secured on the multipliers 21 and connected with the generators 6 by shafts 30.

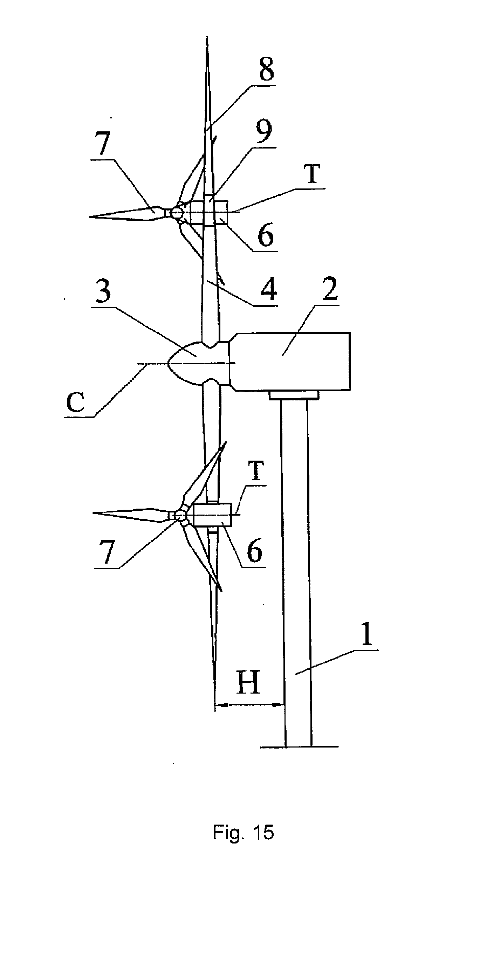

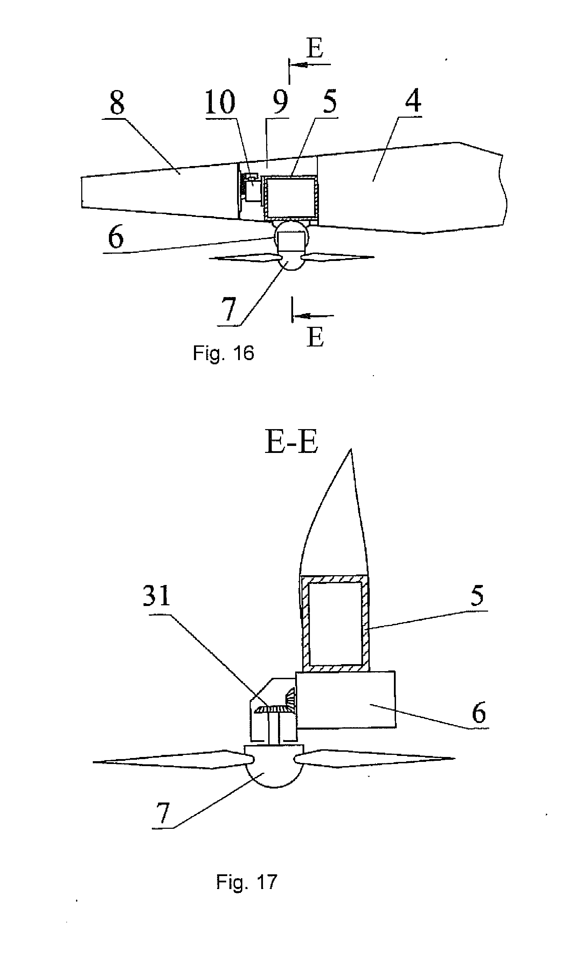

Fig. 15, Fig. 16, Fig. 17 present an embodiment of the wind turbine, in which the generators 6 are mounted on the box-like member so that the axis T (Fig. 15) of rotation of the generators 6 shafts are parallel to the axis C of rotation of the wind-wheel 3. This eliminates the presence of gyroscopic torque, which is available in all analogs and in the closest prior art and acts on the shaft and other generators elements, which are fixed to their shafts. The said position of the generator is achieved by using a bevel-gear set 31 (Fig. 17). The fact of considerable importance is that in all embodiments of the wind turbine with the bevel-gear set 31 the wind-wheel 3 (Fig. 15) is located closer to the support 1 (distance H is less in comparison with the closest prior art and the analogs), what significantly reduces the load on the rotational head 2 and the support 1. In addition, the generator 6, which is located crosswise to the wind flow, is cooled well.

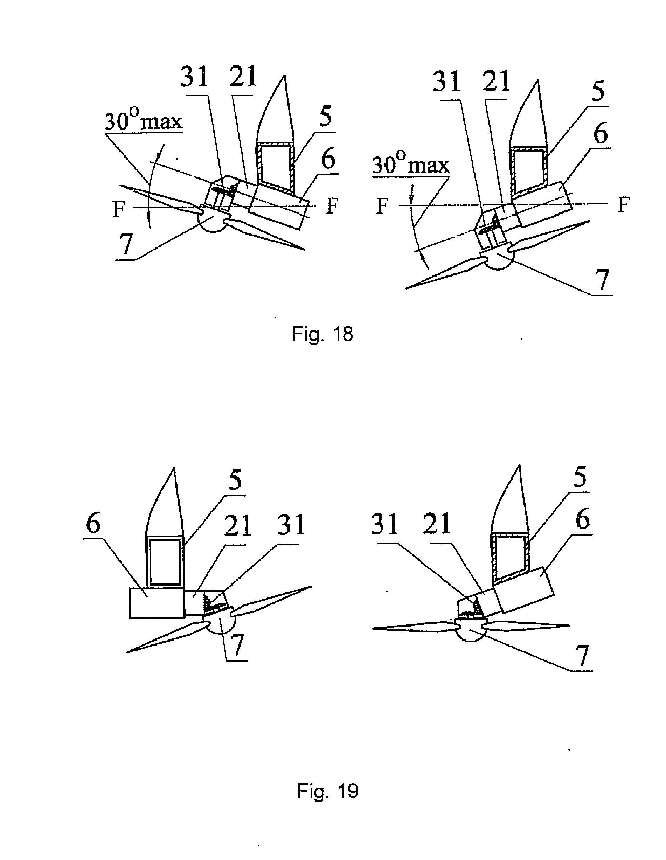

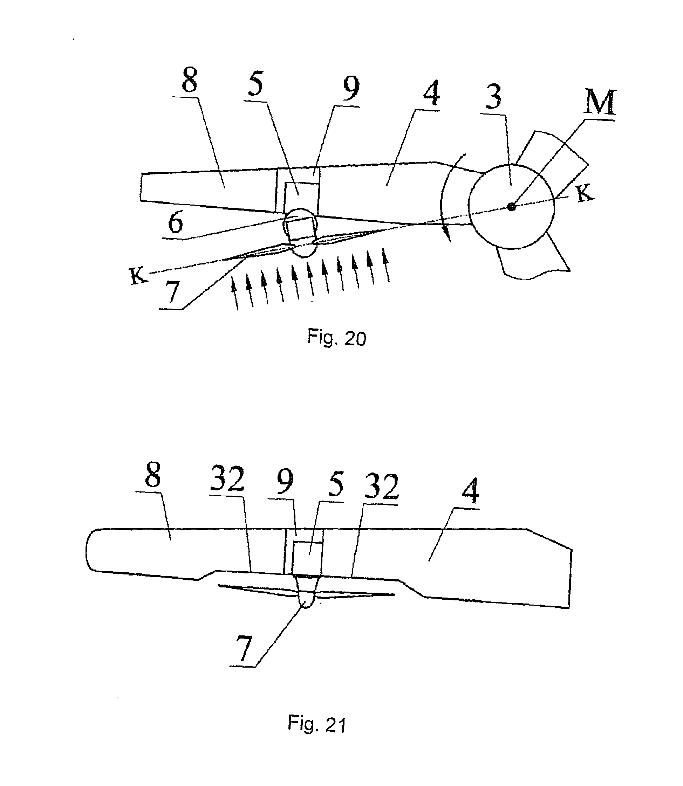

Fig. 18, Fig. 19. Fig. 20 show different variants of positions of the generators 6 and the additional wind-wheel 7 relative to the axis of rotation of the wind-wheel 3, wherein for use of more high-speed generators the multiplier 21 is used. In Fig. 20 the additional wind-wheel is positioned in such a way that the plane K-K of its blades rotation coincides with the rotation axis M of the wind-wheel 3. On the structural grounds, in said embodiments of the wind turbine axes of the generators shafts rotation are preferably located at an angle from 0 to 30 degrees in any direction relative to the line F-F (Fig. 18), which is parallel to the rotation axis C (Fig. 15) of the wind-wheel 3.

Fig. 21 shows an embodiment of the wind turbine, in which cutouts 32 to accommodate the additional wind-wheel 7 are made in the pivoting end 8 and the stationary 4 blade portions of the wind-wheel 4, a wind-wheel blades 3 have the outer surface to be respectively profiled in the areas of the cutouts. The cutouts 32 can accommodate the additional wind-wheel 7 near the box-like members 5.

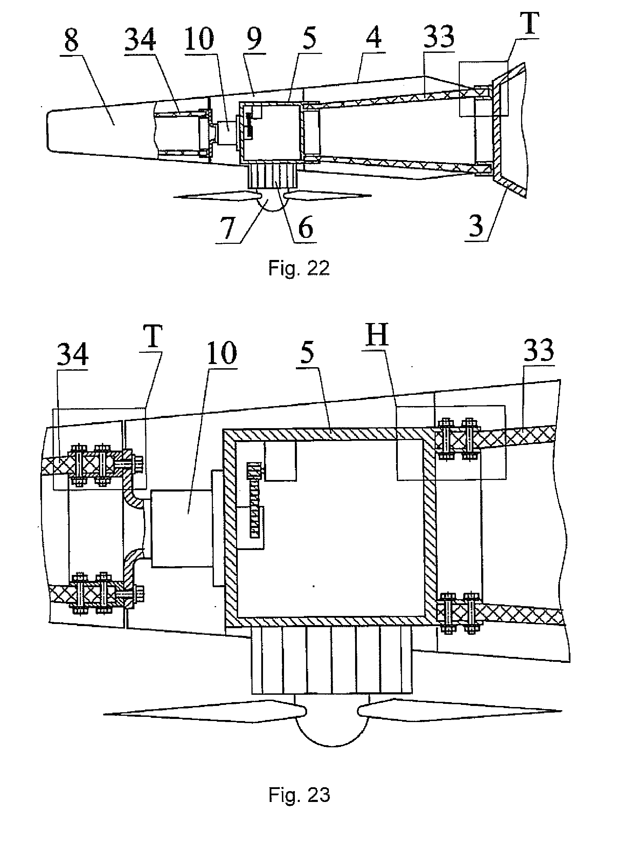

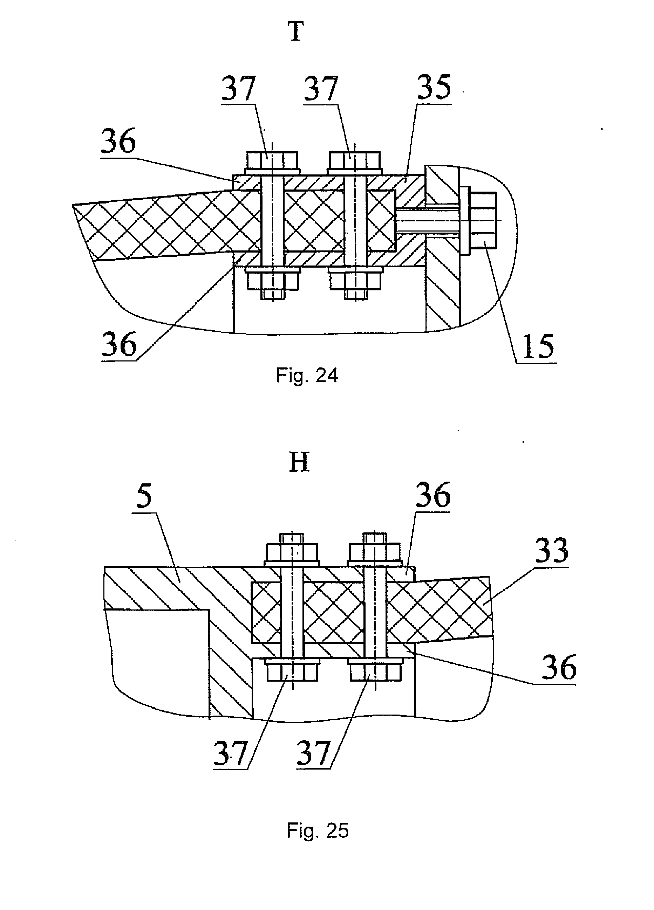

Fig. 21, Fig. 22, Fig. 23, Fig. 24 show an embodiment of the wind turbine, in which the pivoting blades ends 8 and the stationary blades portions 4 have longerons 33, 34 of a composite material. Meanwhile, the longeron walls are held by the screws 37. To increase friction the screws 37 bend metal walls 36 which clamp the longeron walls between them. And in addition, the longeron walls and the metal walls 36 are connected together with glue. Metal elements 35 (Fig. 24) are connected with other metal elements with screws 15.

Thus, the claimed device has significant advantages over the closest prior art and other known devices of similar purpose.

All the above contributes to its use in the energy industry.

## Claims

1. A wind turbine, including a fixed support, a rotational head and a wind-wheel comprising generators and additional wind-wheels, the rotation axis of the wind-wheel being located horizontally, the wind-wheel blades having pivoting end portions, and the additional wind-wheels being connected with the generators, **characterized in that** the wind-wheel blades are equipped with box-like members mounted on the ends of their fixed portions, generators and pivoting end portions of the blades are mounted on the box-like members, wherein the generators are located on the front side of the wind-wheel blade with respect to the air flow.

2. The wind turbine according to claim 1, **characterized in that** mechanisms for turning the end blade portions, elements of fastening the stationary portions of the wind-wheel blades, of fastening the generators and of fastening the mechanisms for turning the end blade portions are located inside the box-like members.

3. The wind turbine according to claim 1, **characterized in that** the generators bodies are located inside the box-like members.

4. The wind turbine according to claim 1, **characterized in that** the generators are equipped with multipliers connected with the additional wind-wheels.

5. The wind turbine according to claim 1, **characterized in that** the generators are connected with the additional wind-wheels via a bevel-gear set, the rotation axes of the generators shafts being positioned at an angle from 0 to 30 degrees in any direction relative to a line parallel to the axis of the wind-wheel rotation.

6. The wind turbine according to claim 1, **characterized in that** the blades of the additional wind-wheel are positioned at an angle of 80 to 100 degrees with respect to the axis of its rotation.

7. The wind turbine according to claim 1, **characterized in that** cutouts to accommodate the additional wind-wheels are made in the blades of the wind-wheel.
